Europäisches Patentamt

European Patent Office

Office européen des brevets

(19)

(11) Numéro de publication : **0 088 651**
**B1**

(12)

# FASCICULE DE BREVET EUROPÉEN

(45) Date de publication du fascicule du brevet :
**30.07.86**

(51) Int. Cl.⁴ : **F 16 L 59/02**

(21) Numéro de dépôt : **83400298.2**

(22) Date de dépôt : **11.02.83**

(54) **Canalisation isolée pour fluide dans un environnement glacé.**

(30) Priorité : **26.02.82 FR 8203193**

(43) Date de publication de la demande :
**14.09.83 Bulletin 83/37**

(45) Mention de la délivrance du brevet :
**30.07.86 Bulletin 86/31**

(84) Etats contractants désignés :
**BE DE GB IT NL SE**

(56) Documents cités :
**FR-A-   698 790**
**FR-A- 1 311 116**
**US-A- 3 175 586**

(73) Titulaire : **Société DISTRIGAZ**
**31, avenue des Arts**
**B-1040 Bruxelles (BE)**

**Société Française de Stockage Géologique "GEOS-TOCK"**
**Tour Aurore - Cédex No 5**
**F-92080 Paris La Défense2   (FR)**

(72) Inventeur : **Luyten, Walter**
**Schijnparklaan 24**
**2120 Schoten (BE)**
Inventeur : **Boulanger, Alain**
**7, rue de l'Alboni**
**F-75016 Paris (FR)**

(74) Mandataire : **Pinguet, André**
**CAPRI 28 bis, avenue Mozart**
**F-75016 Paris (FR)**

Jouve, 18, rue St-Denis, 75001 Paris, France .

## Description

La présente invention a pour objet une canalisation comportant un revêtement isolant, prévue pour véhiculer un fluide en traversant un environnement aqueux dont la température après mise en place de la canalisation reste en permanence en dessous du point de congélation de l'eau imprégnant l'environnement.

Une telle canalisation peut servir, à titre d'exemple, de communication entre des installations de surface et une cavité souterraine de stockage de produits à basse température, par exemple du gaz liquéfié à pression atmosphérique. Les températures de service de tels stockages peuvent atteindre des valeurs de l'ordre de — 150 °C. Dans ces conditions, le massif environnant gèle progressivement à partir de la date de mise en froid de la cavité et reste gelé tant que le stockage est en service. La canalisation est mise en place avant que le terrain ne soit gelé. Lors du gel, l'eau pouvant imprégner le terrain, se dilate pour former de la glace et peut déformer de façon importante la canalisation ou le cas échéant son revêtement isolant.

Il est possible de réaliser des canalisations susceptibles de résister par elles-mêmes à la pression développée dans le terrain lors de la prise de la glace. Mais, il s'agit ici d'une canalisation garnie d'un revêtement isolant, puisqu'elle doit véhiculer un produit à basse température en traversant un terrain dont la température le long de la canalisation est distribuée depuis la température du fluide jusqu'à la température ambiante. Pour éviter des pertes thermiques importantes, il faut que la canalisation soit calorifugée sur toute sa longueur. Or, les revêtements isolants n'ont par eux-mêmes pas une grande résistance à la déformation sous la pression de formation de la glace. Une protection extérieure, assez résistante pour résister à un tel effort, serait très coûteuse. Or, la déformation du revêtement isolant doit être évitée, non seulement parce qu'une fois comprimé son pouvoir isolant n'est plus le même, mais par suite de la déformation qui peut avoir des prolongements dans un terrain non gelé, l'eau peut pénétrer dans le revêtement et l'imprégner, ce qui lui fait perdre sa capacité d'isolement.

L'invention a pour objet une canalisation garnie d'un revêtement isolant, permettant d'éviter la déformation de l'isolement lors de la formation de la glace autour de la canalisation.

On connaît des revêtements isolants pour canalisations composées de plusieurs couches de matériaux différents tels que les revêtements décrits dans le brevet français FR-A-1 311 116, dans lequel l'isolant est protégé successivement vers l'extérieur par sa couche-support, une couche de mousse plastique et une couche de maintien imperméable, mais un tel revêtement, s'il assure une certaine protection de son isolant aux pressions, tractions, chocs et intempéries, ne résout pas le problème à la base de la présente invention, car la résistance mécanique de la couche de mousse plastique n'est pas *a priori* inférieure à celle de l'isolant à base de fibres minérales.

Conformément à la présente invention, la canalisation comporte un tube entouré d'un revêtement isolant, prévu pour véhiculer un fluide en traversant un environnement aqueux dont la température après mise en place de la canalisation reste en permanence en dessous du point de congélation de l'eau imprégnant l'environnement et est remarquable notamment en ce qu'elle comporte autour du revêtement isolant une couche d'un matériau écrasable de résistance mécanique inférieure à celle de l'isolant, entourée d'un revêtement de maintien imperméable.

A titre d'exemple, cette couche peut être réalisée en polyuréthane cellulaire.

Ainsi, lors de la formation de la glace, la pression développée par le massif environnant écrasera la couche peu résistante. On peut déterminer expérimentalement l'importance à donner à cette couche. Avantageusement, la couche sera garnie extérieurement d'un revêtement de tenue, étanche, pour éviter que la couche ne s'imprègne d'eau qui formerait de la glace. La couche deviendrait alors incompressible.

On a déjà proposé des revêtements isolants pour différentes applications. Mais le revêtement de la présente invention concerne un problème spécifique. Pour obtenir le résultat, il faut, autour d'une couche isolante, prévoir une couche écrasable enveloppée d'un revêtement imperméable. En effet si la couche écrasable venait à être imprégnée d'eau, lors du gel du terrain, l'eau gèlerait et la couche ne serait plus écrasable.

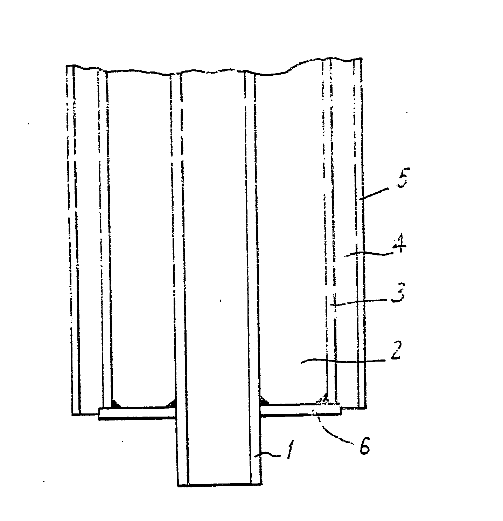

D'autres caractéristiques de l'invention apparaîtront au cours de la description qui va suivre, donnée à titre d'exemple non limitatif en regard du dessin ci-joint, et qui fera bien comprendre comment l'invention peut être réalisée.

La figure unique représente en coupe axiale une canalisation selon l'invention.

La canalisation est formée d'un tube 1, entouré d'un revêtement isolant 2, protégé par une gaine 3, entourée par une couche de matière peu résistante 4, elle-même garnie d'un revêtement de tenue 5.

Le tube 1 peut être en toute matière appropriée au produit à véhiculer et à la température de service. A titre d'exemple, pour des gaz liquéfiés dont la température est comprise entre — 40 et — 196 °C, le tube peut être en résine époxy armée de fibres de verre. La gaine 3 peut être réalisée avec le même matériau, ainsi qu'également une plaque d'extrémité 6 qui est avantageusement soudée au tube 1 et à la gaine 3. Le revêtement isolant 2 ainsi que la couche peu résistante 4 peuvent être en polyuréthane cellulaire. Le revêtement 5 peut être constitué d'un bandage de tenue recouvert d'une couche de vernis étanche pour empêcher l'imprégnation du polyuréthane par l'eau avant le gel du terrain. La couche 4 doit pouvoir s'écraser plus facilement que la couche 2 avec sa gaine 3. A défaut de revêtement imperméable, la couche 4 s'imprégnerait d'eau avant le gel et, en gelant, deviendrait inécrasable. Des déchirures se formeraient, qui pourraient s'étendre hors de la zone gelée et de l'eau pourrait pénétrer dans la couche isolante. L'épaisseur de la couche 4 peut être déterminée empiriquement. A titre d'exemple, pour un terrain sableux imprégné d'eau, on peut avoir les dimensions suivantes, exprimées en diamètre :

| | |
|---|---|
| tube 1 | = 150 mm |
| gaine 3 entourant le revêtement isolant 2 | = 300 mm |
| revêtement 5 entourant la couche peu résistante 4 | = 400 mm |

pour un produit dont la température de stockage est de — 196 °C.

Dans une autre application, une telle canalisation peut être enterrée dans une tranchée creusée dans un terrain gelé en permanence (permafrost). La canalisation est placée dans la tranchée, puis celle-ci est remblayée. Par la suite, le remblai qui peut s'imprégner d'eau gèle et peut comprimer la canalisation dans des conditions analogues à celles décrites dans l'application précédente.

Il va de soi que le mode de réalisation décrit n'est qu'un exemple et qu'il serait possible de le modifier, notamment par substitution d'équivalents techniques, sans sortir pour cela du cadre de l'invention.

## Revendications

1. Canalisation comportant un tube (1) entouré d'un revêtement isolant (2), prévue pour véhiculer un fluide en traversant un environnement aqueux dont la température après mise en place de la canalisation reste en permanence en dessous du point de congélation de l'eau imprégnant l'environnement, caractérisée en ce qu'elle comporte autour du revêtement isolant (2) une couche d'un matériau écrasable (4) de résistance mécanique inférieure à celle de l'isolant, entourée d'un revêtement (5) de maintien imperméable.

2. Canalisation selon la revendication 1, caractérisée en ce que le revêtement isolant (2) est séparé de la couche écrasable (4) par une gaine rigide et imperméable (3).

3. Canalisation selon une des revendications 1 ou 2, caractérisée en ce que la couche écrasable (4) est en polyuréthane cellulaire.

4. Canalisation selon une des revendications précédentes, caractérisée en ce que le revêtement de tenue (5) est constitué par un bandage recouvert d'une couche de vernis imperméable.

## Claims

1. A duct comprising a tube (1) surrounded by an insulating covering (2) arranged to convey a fluid whilst passing through an aqueous environment whose temperature, after the duct is placed in position, permanently remains below the freezing point of the water impregnating the environment, characterised in that around the insulating covering (2) it comprises a layer of crushable material (4) of lower mechanical strength than that of the insulating material, surrounded by a waterproof holding coating (5).

2. A duct according to claim 1, characterised in that the insulating covering (2) is separated from the crushable layer (4) by a rigid and impermeable sheath (3).

3. A duct according to one of the claims 1 or 2, characterised in that the crushable layer (4) is of expanded polyurethane.

4. A duct according to one of the proceding claims, characterised in that the holding coating (5) comprises a bandage coated with a layer of impermeable varnish.

## Patentansprüche

1. Leitung mit einem Rohr (1), das von einer Isolierschicht (2) umgeben ist zum Transport eines Fluids in einer wasserhaltigen Umgebung, deren Temperatur nach dem Einsetzen der Leitung permanent unterhalb des Gefrierpunktes des in der Umgebung enthaltenen Wassers liegt, dadurch gekennzeichnet, daß sie um die Isolierschicht (2) herum eine Schicht (4) aus einem nachgiebigen Material aufweist, mit geringerer mechanischer Widerstandsfähigkeit als diejenige der Isolierschicht und daß sie von einer wasserundurchlässigen Halteschicht (5) umgeben ist.

2. Leitung nach Anspruch 1, dadurch gekennzeichnet, daß die Isolierschicht (2) von der nachgiebigen Schicht (4) durch eine steife und wasserundurchlässige Hülle (3) getrennt ist.

3. Leitung nach einem der Ansprüche 1 oder 2, dadurch gekennzeichnet, daß die nachgiebige Schicht (4) aus zellförmigen Polyurethan besteht.

4. Leitung nach einem der vorhergehenden Ansprüche, dadurch gekennzeichnet, daß die Halteschicht (5) aus einer Bandage besteht, die mit einem wasserundurchlässigen Anstrich beschicht ist.